# EUROPEAN PATENT SPECIFICATION

(11) **EP 2 529 528 B1**
(45) Date of publication and mention of the grant of the patent: **10.01.2018**
(21) Application number: 10705215.1
(22) Date of filing: 28.01.2010
(51) Int. Cl.: H04L 29/06

(54) **A METHOD AND APPARATUS FOR PARSING A NETWORK ABSTRACTION-LAYER FOR RELIABLE DATA COMMUNICATION**
VERFAHREN UND VORRICHTUNG FÜR DAS PARSING EINER NETZWERKABSTRAKTIONSSCHICHT FÜR ZUVERLÄSSIGE DATENKOMMUNIKATION
PROCÉDÉ ET APPAREIL D'ANALYSE D'UNE COUCHE D'ABSTRACTION DE RÉSEAU POUR UNE COMMUNICATION DE DONNÉES FIABLE

(43) Date of publication of application: 05.12.2012
(73) Proprietor: Thomson Licensing, 92130 Issy-les-Moulineaux (FR)
(72) Inventor: LU, Xiuping, Hillsborough New Jersey 08844 (US); MANDREKAR, Ishan, Uday, Monmouth Junction New Jersey 08852 (US); PERUMANAM, Ramkumar, Edison New Jersey 08820 (US); LIU, Hang, Yardley Pennsylvania 19067 (US)
(74) Representative: Frese Patent - Patentanwälte
(86) International application number: PCT/US2010/000223
(87) International publication number: WO 2011/093835

(56) References cited:
- EP-A2- 0 853 407
- WO-A1-2007/046957
- WO-A1-2010/002420
- US-A1- 2009 175 353

## Description

The present application relates to digital data networks in general and in particular, to an abstraction-layer header parser for prioritizing digital data for reliable digital data transmission.

In multicast or broadcast applications, data are typically transmitted from a server to multiple receivers over wired and/or wireless networks. A multicast system as used herein is a system in which a server transmits the same data to multiple receivers simultaneously, where the receivers form a subset of all the receivers up to and including all of the receivers. A broadcast system is a system in which a server transmits the same data to all of the receivers simultaneously. That is, a multicast system by definition can include a broadcast system.

Data is usually formatted into packets and/or frames for transmission. That is, packets and/or frames are data formatting schemes. As used herein data can be formatted into any convenient format for transmission including packets and/or frames. "Packet" will, thus, be used herein to define any data formatting scheme known to one of ordinary skill in the art.

Video transmission or distribution in wireless networks is used by way of example herein of one application of a digital data network. Video transmission in a wireless data network normally involves packet loss caused by channel error conditions such as interference, channel fading, collision, etc. When such channel error conditions occur, the wireless link layer of the protocol stack may try to retransmit packets for a fixed number of times within a fixed time period. If these retransmissions are not successful, the packets are dropped by the wireless link layer. Internet Protocol (IP) network based video transmission typically delivers video packets to the destination (receiver; sometimes referred to as a client herein) using Real-time Transport Protocol (RTP) protocol that, in turn, uses either a reliable Transmission Control Protocol (TCP) transport protocol or a less reliable User Datagram Protocol (UDP) transport protocol. When the less reliable UDP protocol is used, for example, the protocol does not provide a means to detect out-of-order packets or recover lost packets and leaves the responsibility to an application to recover packet delivery errors. In contrast, when TCP protocol is used, end-to-end acknowledgements are provided so that the protocol tries to send and/or recover media (audio, video, multimedia, ...) packets (data) strictly in the order in which the packets are to be handled by the application. When packet errors are detected, TCP provides a sliding window mechanism for data flow control and reduces the packet transmission rate. TCP keeps retransmitting the lost packets until they are recovered.

Video transmission is an example of an application which occurs in real time and has a user viewing experience associated with the receipt and rendering of the data. A latency or time constraint within which the packets have to be delivered or recovered should not impact the end user's viewing experience. Therefore, packet errors ought to be recovered within a limited time; otherwise, the data may not be viewable. TCP does not presently provide for control of packet recovery based on a time constraint. Consequently, using TCP, as the transport protocol for wireless networks, could lead to a poor user viewing experience. Furthermore, TCP requires positive acknowledgement for all the transmitted data packets. The TCP uplink acknowledgements (from data receiver to data transmitter (sender)) compete for the wireless bandwidth with downlink data traffic (from transmitter (sender) to receiver). If collisions occur among downlink and uplink transmissions, the collisions could lead to further throughput reduction.

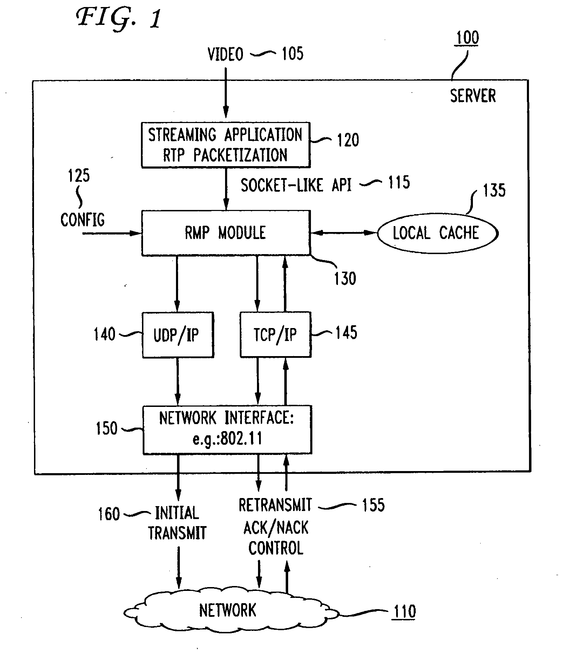

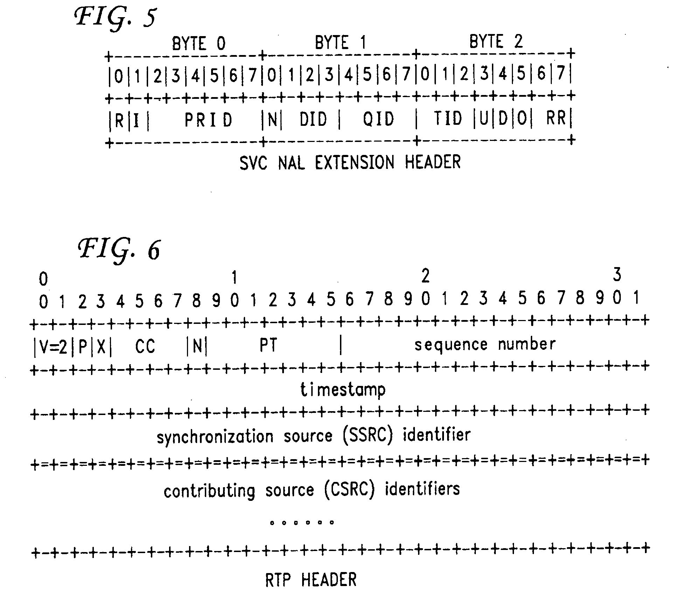

PCT Application US/09/005,499, filed October 7, 2009, discloses an efficient application-layer automatic repeat request retransmission method where data to be transmitted is buffered or cached at a module for implementing a reliable media protocol to recover lost data packets and aid, for example, in real-time streaming (such as video) data applications. Referring briefly to FIG. 1 (derived from FIG. 5 of PCT Application US/09/005,499 mentioned above), a real-time protocol packetization module 120 is provided at a real-time server 100, for example, for receiving a video digital data input 105. Real-time protocol (RTP) packetization module 120, providing a streaming application, is connected via, for example, a socket-like application programming interface (API) or interfaces 115 to the reliable media protocol module 130. This reliable media protocol module accepts configuration data parameters 125 (such as cache or buffer size, maximum time to wait for packet recovery and the like), determined, for example, by the digital application. The digital application may be, for example, telephony, audio, video or multimedia among other known applications. The local buffer or cache memory 135 temporarily stores initially transmitted packets until it may be determined whether they need be retransmitted or discarded. Server 100 transmits digital data by way of one of UDP/IP transmitter interface 140 or TCP/IP transmitter/receiver interface 145 and a digital data network interface, for example, an Ethernet/802.11 interface 150. Initial real-time transmission may occur via initial transmit 160 to network 110 with real-time packets temporarily stored in cache/buffer 135, for example, awaiting receipt of Retransmit ACK/NACK control 155 or a predetermined time-out.

It would be advantageous to have an efficient method and apparatus to add further reliability to a reliable media protocol based real-time data transmission system such as the one disclosed in the foregoing PCT Application US/09/005,499. The US 2009/0175353 discloses an SVC encoding module which includes the base layer encoding module, and multiple enhanced layer encoding modules. The NALU format is composed of the NALH (Network Abstraction Layer Header) including the label and the NAL (Network Abstraction Layer) payload. Here, the label is determined based on layer information which is combination of a spatial scalable level, a temporal scalable level, and a quality scalable level of the encoded data. The decoder uses the label to decide which one of multiple decoding modules is used to decode the current NAL payload. The present invention addresses these and/or other issues.

In accordance with an aspect of the present invention, a method is disclosed. According to an exemplary embodiment, the method comprises parsing an abstraction-layer header of a digital data packet to obtain layer representation data; and assigning a priority to the digital data packet for the representation layer responsive to the parsing.

In accordance with another aspect of the present invention, an apparatus is disclosed. According to an exemplary embodiment, an apparatus comprises means, such as an abstraction-layer header parser, for obtaining layer representation data from a digital data packet and for assigning a priority to the layer representation data, and means, such as a memory, for storing recently transmitted packets with the assigned priority in the memory.

In accordance with another aspect of the present invention, an apparatus is disclosed. According to an exemplary embodiment, an apparatus comprises means, such as an abstraction-layer header parser, for parsing an abstraction-layer header of a digital data packet to obtain layer representation data and means, such as an abstraction-layer header parser, for assigning a priority to the digital data packet for the representation layer responsive to the parsing.

The above-mentioned and other features and advantages of this invention, and the manner of attaining them, will become more apparent and the invention will be better understood by reference to the following description of embodiments of the invention taken in conjunction with the accompanying drawings, wherein:
Fig. 1 is a schematic block diagram of a server having a reliable media protocol module and local cache or buffer for storing, for example, real-time packets awaiting a retransmission decision derived from FIG. 5 of related PCT Application US/09/005,499 mentioned above.

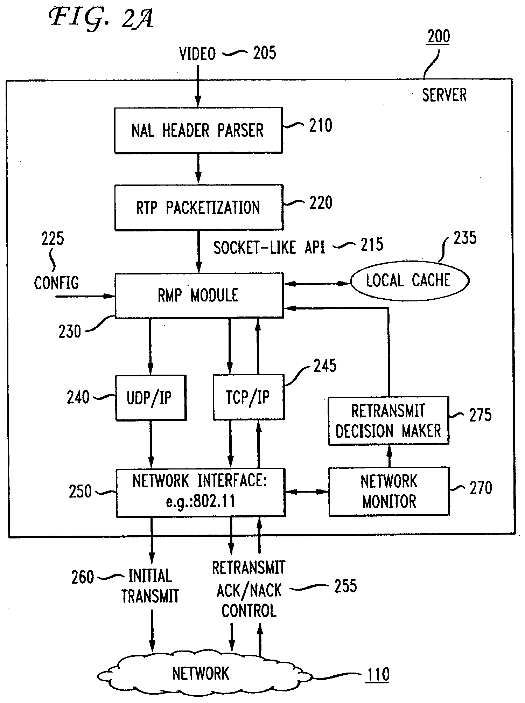

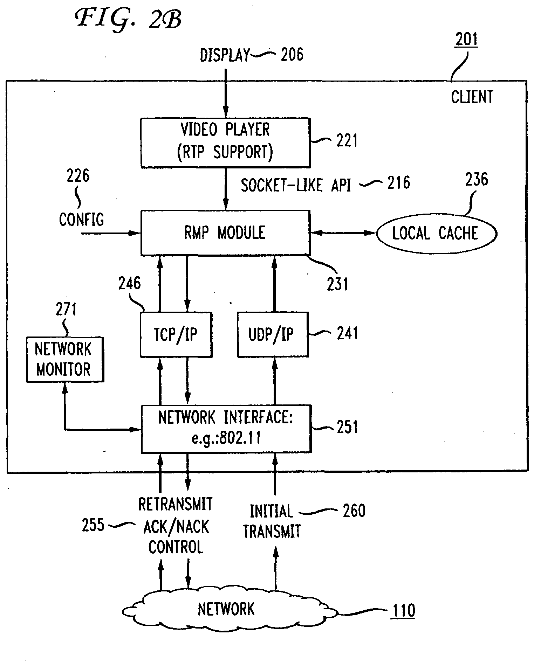

Fig. 2A is a schematic block diagram of a server in accordance with the principles of the present invention, further showing a network abstraction-layer (NAL) header parser according to the present invention and a network monitor and retransmit decision maker for monitoring a network interface for current network statistical data and providing an input to a reliable media protocol (RMP) module; Fig. 2B is a schematic block diagram of an associated client having a network monitor for collecting receiver network-specific statistical data for transmission to the server of Fig. 2A in accordance with the principles of the present invention.

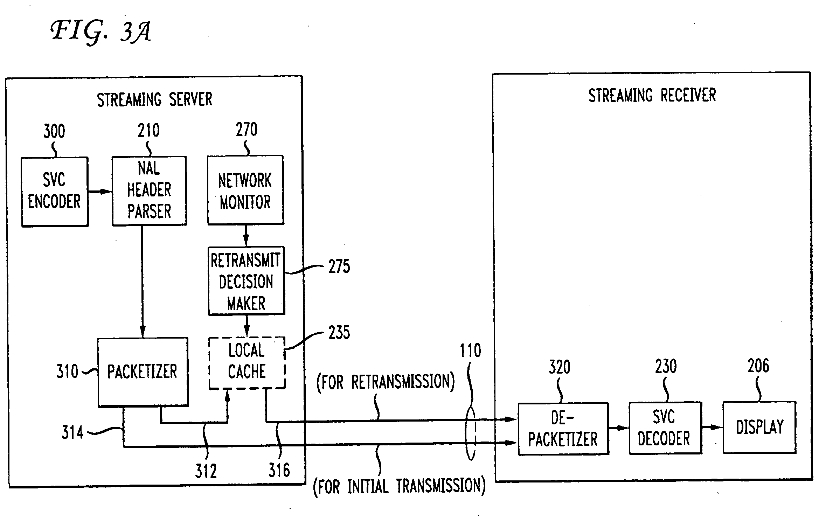

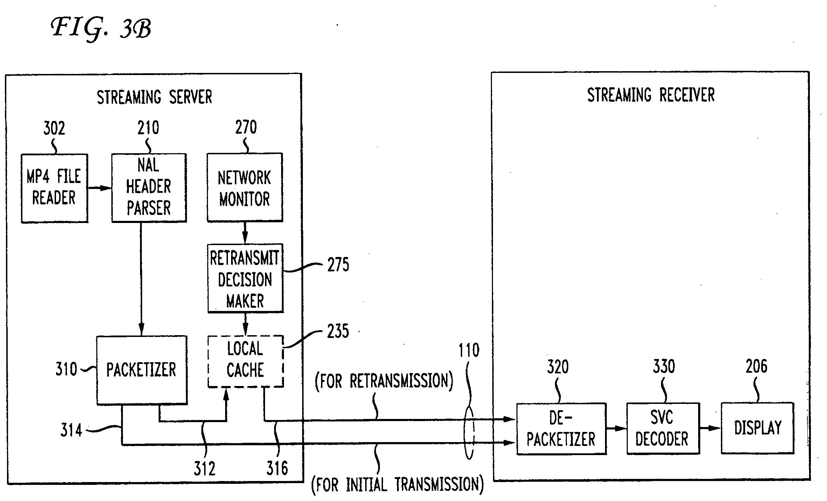

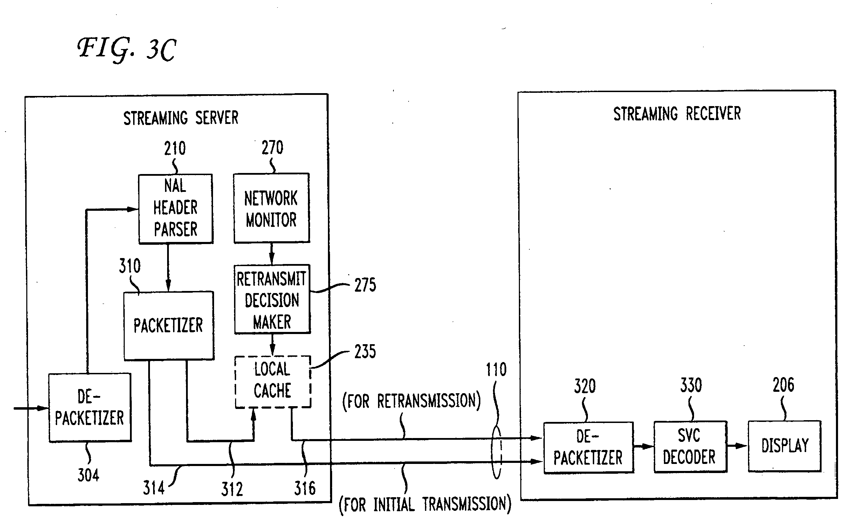

Fig. 3A is a simplified block schematic drawing of a streaming server in accordance with the principles of the present invention having a NAL header parser for receiving an input from a scalable video coding (SVC) encoder, a network monitor and a retransmit decision maker. Fig. 3A further depicts a streaming receiver for receiving digital data from the streaming server. Fig. 3B is a block schematic drawing of the streaming server of Fig. 3A showing the NAL header parser receiving an input from a local MP4 file reader, and Fig. 3C shows the NAL header parser of Fig. 3A receiving an input from the network via a de-packetizer.
Fig. 4 shows a flowchart of operations at a sender side for abstraction-layer header parsing in accordance with the principles of the present invention further including network monitoring at the sender side where the sender may be a transmitter, server or streaming server of Fig. 2A or Fig. 3. Fig. 4 also depicts further network monitoring at a receiver side. The receiver side may be the client of Fig. 2B or the streaming receiver of Fig. 3.
Fig. 5 shows an exemplary data contents representation format of a scalable video coder (SVC) Network Abstraction Layer (NAL) extension header for parsing according to the principles of the present invention.
Fig. 6 shows an exemplary format of a real-time protocol (RTP) header from which network monitoring statistics may be derived according to aspects of the present invention.
Fig. 7 shows an exemplary format of an MPEG transport stream (TS) header, for example, MPEG-2, including a continuity counter (CC) field from which network monitoring statistics may be derived according to aspects of the present invention.
Fig. 8 shows an exemplary format of a message including a transmission request and end-to-end packet loss rate from which network monitoring statistics may be derived according to aspects of the present invention.
Fig. 9 shows a first exemplary format of an ARQ request (NACK) packet from which network monitoring statistics may be derived according to aspects of the present invention.
Fig. 10 shows a second exemplary format of an RMP ARQ Request (NACK) packet in which network monitoring statistics may be transmitted and derived according to aspects of the present invention.

The present invention is directed to a method and apparatus at a transmitter or sender for parsing an abstraction-layer header as an input to the real-time (for example, real-time protocol or RTP) packetization for a module for a reliable media protocol (RMP). According to one embodiment, a network abstraction-layer (NAL), for example, an H.264/AVC Network Abstraction Layer (NAL) of a real-time video encoder such as an MPEG-4 scalable video encoder (SVC) comprises a header that provides fields that may be parsed to determine digital data priority. For example, the NAL is network-friendly and may represent one of several digital data applications, for example, video telephony applications, video conversational applications, video conferencing applications or other conversational application as well as non-conversational applications such as storage of a down-loaded movie in memory, a broadcast or multicast application, a streaming data application or other non-conversational application. The NAL, for example, may be defined to represent a plurality of abstraction-layer units in the form of packets having one or more bytes. The first byte of each NAL unit may be a header byte indicating the type of data of the unit while remaining bytes contain payload data of a type indicated by the NAL header.

According to one embodiment, an abstraction-layer header parser comprises parsing a scalable video encoder abstraction-layer header to obtain data from one of a plurality of fields. According to aspects of this embodiment, the abstraction-layer header parser may operate, for example, on output digital video data of an MPEG 4 file reader or accept digital data from a network as received at a de-packetizer. For example, the abstraction-layer header parser may parse a DID field which represents an inter-layer coding dependency level of layer representation. A QID field represents a quality level of medium grain scalability (MGS) layer representation. A TID field represents a temporal level of layer representation. One result of parsing an abstraction-layer header, comprising such fields, is to identify the layer that the following payload data is associated with. Responsive to the identification of the payload data type, one may assign a different priority for each identified layer. For example, a base layer may receive a high priority for retransmission from buffer or cache memory since base layer is absolutely necessary for a complete decoding at a receiver. An enhancement layer may be assigned a medium priority since enhancement layer data is necessary for decoding of a higher layer. On the other hand, a high enhancement layer may be assigned a low priority. Once assigned a priority, for example, low, medium and high, the priority information may be represented in a "payload type" (PT) or similar field of a real-time protocol (RTP) header, if retransmission is called for at the transport layer, or in a type of service (TOS) field of an IP header. A type of service field may be also known in the art, by way of example, as a differential services (DS) field. The first two bits are known as explicit congestion notification (ECN) bits, and the next six bits of a DS field byte are known as differential services code point (DSCP) bits. Type of service will be generally used herein to refer to these and other formats for providing type of service data. A real-time packet retransmission decision made by a reliable media protocol module may be thus layer-aware when modified to incorporate an abstraction-layer header parser and method according to one embodiment.

In a further embodiment, a network monitor is provided for monitoring data network quality via a data network interface and, for example, collecting current network data statistics such as packet loss rate, available bandwidth, and round-trip delay for input to a retransmit decision maker. The retransmit decision maker, in turn, may provide an input to the reliable media protocol (RMP) module so that a decision on retransmission may be based on current network conditions according to the data network statistical data collected at the network monitor.

Accordingly, a digital transmission method comprises parsing an abstraction-layer header of a digital data packet to obtain layer representation data, and assigning a priority to the digital data packet for the representation layer responsive to the parsing. Obtaining layer representation data may comprise one or all of determining inter-layer coding dependency level, determining a quality level of grain scalability and determining temporal level of the layer representation. Moreover, the method may further comprise one of representing the priority level in a payload type field of a real-time transport packet (RTP) header or in a type of service field of an internet protocol packet header. As described above, an input to the abstraction-layer header parser may be received from a de-packetizer for receiving network data or received from a local server memory such as one associated with an MPEG file reader.

Moreover, in a further embodiment, a digital data transmitter may comprise an abstraction-layer header parser to obtain layer representation data from a digital data packet and assign a priority to the layer representation data, a digital data monitor for collecting network transport statistics, and a retransmission decision maker for deciding whether to retransmit a digital data packet based on the digital data packet priority and the collected network transport statistics. As explained above, such an abstraction-layer header parser in a further embodiment may be a network abstraction-layer header parser for digital video data packet applications.

More specifically, referring to Figures 2-10, video transmission or distribution in wireless networks typically use real-time transport protocol (RTP), motion picture expert group 2 transport stream (MPEG2TS) over UDP. Real-time video could be distributed from a single source to a single destination (unicast mode) or from a single source to multiple destinations (multicast mode). Since channel conditions vary in wireless networks, packet transmissions, when the channel conditions are not good, result in dropped packets if the link layer error recovery is not successful. In these situations there is a gap in the packet sequence resulting in poor viewing quality for the end user. The present invention provides an abstraction-layer header parsing functionality for an efficient application-layer based retransmission scheme, called reliable media protocol (RMP) herein, to recover packet losses to aid in reliable real-time streaming applications as well as network monitoring capabilities to improve packet retransmission decision making.

Referring to Figures 2A and 2B, in the reliable media protocol (RMP) method of the present invention, RTP packetization 220 and a reliable media protocol (RMP) module 230 are assisted by the inclusion of NAL header parser 210 according to the principles of the present invention. Moreover, a network monitor 270 interfacing to network interface 250 collects current network statistics and via retransmit decision maker 275 improves the reliability of RMP module 230. NAL header parser 210, network monitor 270 and retransmit decision maker 275 are highlighted in FIG. 2A to show that Figure 2A is different from Figure 1 as will be further explained below.

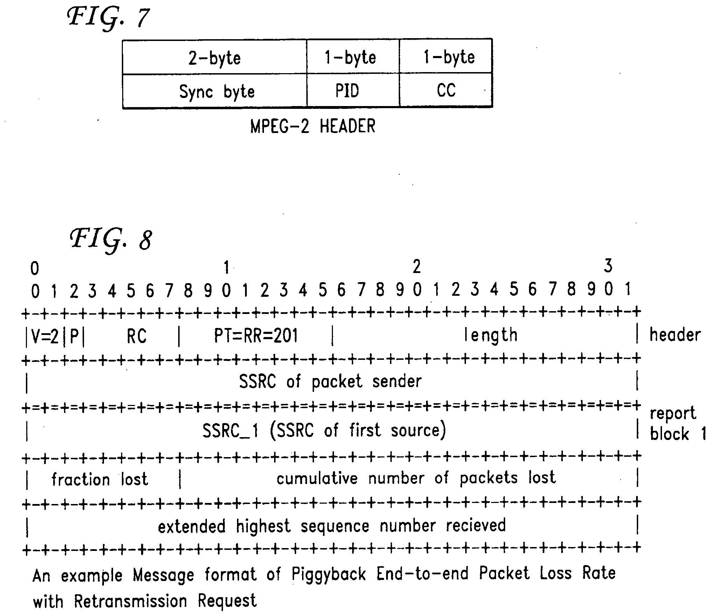

Initially, RMP module 230 transmits regular unicast and multicast data or packets using UDP 240 via interface 250 and channel 260 to network 110. Data is initially stored in local cache 235 with a priority assigned by NAL header parser 210 via RTP packetization 220. Apart from this, an additional reliable TCP-based control channel 245, 250, 255 is established between the source (transmitter, sender) of Fig. 2A and the destination (receiver, sink, client) 201 of Fig. 2B to request and receive the retransmission of lost packets. For this mechanism to work properly, the transmitter (sender, server) 200 maintains a cache 235 of the most recent packets sent to its receivers/clients 201 (FIG. 2B). One or more receivers/clients 201 (FIG. 2B) receive the data packets from the transmitter/server 200 and may detect sequence gaps in the received data packets, for example, using the sequence number field present in the RTP (Figure 6) or MPEG transport stream (TS) header (Figure 7). If the receiver 201 detects a sequence gap, the receiver 201 sends a request on the TCP-based control channel 255 for selective retransmission of the missing data packets. When the transmitter/server 200 receives a retransmission request from one or more of its receivers/clients 201, it looks in its local cache 235 of most recent packets. If the requested packet(s) is/are found in the local cache 235, the sender/server 200 retransmits in unicast a copy of the packet to the receiver 201 on the TCP-based control channel 255 via network 110 depending on assigned priority and current network statistics. If the requested packet was not found in its local cache/buffer 235, the sender 200 continues servicing the rest of the retransmission requests. The receiver/client 201 maintains a delivery queue (buffer/cache) 236 to hold all of the received data packets from both data and control channels. The receiver/client 201 reorders the retransmitted packet into the correct sequence (position) within this queue and delivers the packets to the application in the proper order at the correct time, for example, a video player application 221 for display 206.

The receiver/client 201 (FIG. 2B) maintains a configurable time window to wait for any retransmissions rather than waiting forever so that the packet delay and delay jitter can be kept within the application bounds. Moreover, receiver/client 201 is provided with a network monitor 271 according to one embodiment for collecting network statistics from the perspective of the receiver/client 201 for transmission via control channel 255 to transmitter/server 200. Network monitor 271 is shown highlighted to Figure 2B to show the cooperation between network monitor 271 and network interface 251 for collecting and providing network statistics according to the present invention to transmitter/server 200 for improved retransmission decision making as will be further described herein.

The receiver/client 201 of FIG. 2B passes the rest of the received packets from the delivery queue to the application, for example, video player 221 and display 206, if some of the retransmission replies for the lost packets are not received in time. If some of the retransmitted packets are received beyond the acceptable recovery time window, they may be discarded by the receiver/client 201. It should be noted that a video application can tolerate some data packet loss using error concealment technology in video decoding.

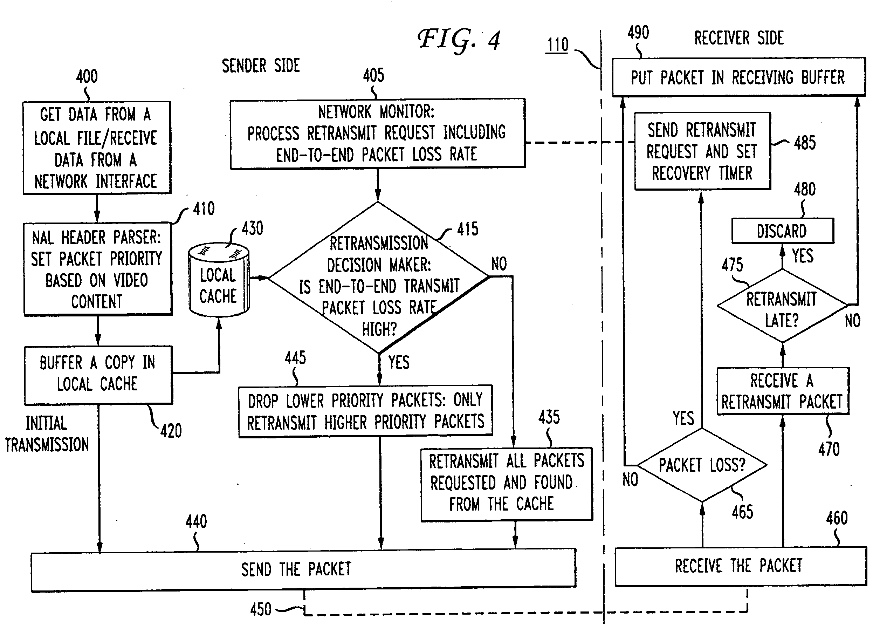

Referring again to FIG. 2A, the reliable media protocol (RMP) scheme of the present invention operates via RMP module 230, 231 between the real-time application/RTP/MPEG TS and UDP/TCP/IP through the assistance of parser 210 for prioritization and improved retransmit decision making with the assistance of network monitors 270 and 271. At server/transmitter 200, an abstraction-layer header parser, for example, Network Abstraction Layer (NAL) header parser 210 operates on locally provided or network provided digital video data 205. NAL header parser 210 outputs a priority and the data for real-time protocol (RTP) packetization 220. Moreover, a network monitor 270 recovers current network 110 statistics and outputs control data to retransmit decision maker 275 to aid RMP module 230. For example, in furtherance to the example of an enhancement layer assigned a medium priority versus a base layer assigned a high priority, RMP module 230 will retransmit the high priority base layer data and not transmit the medium priority enhancement layer data in the face of an available bandwidth detected by network monitor 270 below a given threshold value. For example, rather than transmit all packets held in cache/buffer memory 235, a retransmission decision maker 275 may select a portion of the packets held in memory 235 for retransmission based on network monitor collected statistics, such as packet loss rate or other network conditions, and a priority assigned by NAL header parser 210 that is layer dependent. For example, in furtherance to the example of an enhancement layer assigned a medium priority versus a base layer assigned a high priority, RMP module 230 will retransmit the high priority base layer data and not transmit the medium priority enhancement layer data in the face of an available bandwidth detected by network monitor 270 below a given threshold value. Thus the combination of assigning a priority to data at parser 210 in combination with retransmit decision making according to retransmit decision maker 275 provides for a highly reliable media protocol (RMP) module 230 as will be further described in connection with a discussion of FIG. 4.

Referring again to FIG. 2A, a typical network interface 250 is shown between network 110 and RMP module 230 at server/transmitter 200. Examples of network interface modules 250 are Ethernet cards, IEEE 802.11/WiFi cards and other devices known in the art that connect to the computer network 110.

Fig. 2B shows the schematic of an exemplary implementation of a client device 201. The client may include a video player/streaming application module 221, a display 206, a buffer (cache memory) 236, a reliable media protocol (RMP) module 231, a UDP/IP module 241, a TCP/IP module 246 and a network interface 251. The network interface 251 may be, for example, an Ethernet interface or an IEEE 802.11 interface or other known network interface. The network interface 251 receives all incoming messages. The messages arrive on different sockets/addresses. Network monitor 271 collects current network statistics from the perspective of receiver/client 201 from network interface 251 and outputs a suitable control message on channel 255 reporting on collected statistics. The network interface 251 can thus, determine where to forward received messages from network 110 and output messages from network monitor 271 and TCP/IP module 246. New incoming data packets are forwarded to the UDP/IP interface by the network interface module 251. Requests for retransmission of data packets and the retransmitted data packets are forwarded to the TCP/IP module 246 by the RMP module 231. The RMP module 231 determines if any of the received data packets have been corrupted and makes use of both UDP/IP 241 and TCP/IP 246 to orchestrate the packet recovery. The RMP module 231 generates a retransmission request for any corrupted data packets. The RMP module 231 then forwards the retransmission request to the TCP/IP module 246 for transmission over the network 110. At the network interface 251, any network statistics data collected by network monitor 271 are incorporated into the retransmission request for transmission over network 110. The RMP module 231 also stores the received packets in the local buffer 236 for reordering. Once the retransmitted packets are received from the TCP control channel via the TCP/IP module 246, the RMP module 231 arranges the packets in the correct order. The RMP 231 maintains a queue that is sorted on the sequence number and will reorder and insert packets into this buffer area/queue 236. When the recovery window expires, the RMP module 231 delivers the packets, for example, to the player/streaming application 221 for display 206. The RMP module 231 provides a socket-like application protocol interface (API) 216 for data passing and integration with the application. Note that some packets may not be recovered by the timeout of recovery window.

Data packets arriving after the expiration of the recovery window are discarded per Figure 4. Depending on the application, for example, for video, the streaming/player application 221 depacketizes and/or decodes the data and passes the data to the display/speaker 206. The incoming packets are stored in the RMP "buffer area" 236 and will be handed over, for example, to the application for rendering (display) whenever an application requests a packet. The box labeled "Config" 226 is a "Configuration Interface" to the RMP module 231. RMP module can be configured at the time of initialization to set parameters such as cache size, maximum time to wait for packet recovery, etc.

At a receiver/client 201 according to Fig. 2B, the network monitor 271 may collect current network statistics at network monitor 271 from the perspective of receiver/client 201 via interface 251 and output the network experience of client/receiver 201 via control channel 255 to a server with which it is connected via digital data network 110. Upon receipt at transmitter/server 200 via network 110, such collected network statistics are output via interface 250 to network monitor 270 to supplement statistics gathered by network monitor 270 from the perspective of the transmitter/server of network 110 as discussed above. Digital data network 110 may be any digital data network including but not limited to satellite networks, land-based wireless networks, fiber optic networks, coaxial cable networks, twisted pair networks, local area networks, wide area networks and other known digital data networks. A typical network interface 251 is shown between network 110 and RMP module 231 at client/receiver 201. Examples of network interface modules include Ethernet cards, IEEE 802.11/WiFi cards and the like that connect to the computer network 110.

Before discussing Figure 3 in detail, it is of import to note that similar reference numerals denote similar elements in the drawings. Moreover, the first number of a reference number such the first number 1 of reference number 110 for network 110 indicates the figure number where the element first appears. Consequently, for example, RMP module 230 first appears in Figure 2, is similar to reliable media protocol (RMP) module 130 of Figure 1 but is a different module from reliable media protocol (RMP) module 130 of Figure 1, because of the introduction of NAL Header Parser 210, Network Monitor 270 and Retransmit Decision Maker 275, all of which are not found in Figure 1. Also, network monitor 271 of client/receiver 201 of Fig. 2B, in accordance with the principles of the present invention, improves the operation of RMP module 230 and Retransmit Decision Maker 275 of FIG. 2A. Some of the advantages of parser 210, network monitors 270 and 271 and retransmit decision maker 275 have been described above but will be further described in connection with the discussion of Figures 3 and 4 below.

Figure 3 provides a direct representation of NAL abstraction-layer header parser 210, network monitor 270 and retransmit decision maker 275 of a streaming server/transmitter with reference to transmission to one or more streaming receivers connected via network 110. Referring to Fig. 3A, there is shown a scalable video coder (SVC) encoder 300 which may be located at the streaming server or remotely from it. A scalable video coder (SVC) provides temporal or frame rate scalability, spatial or picture size scalability (video is, for example, coded at multiple resolutions and aspect ratios) and signal-to-noise ratio (SNR) or quality/fidelity scalability as will be described further herein. NAL header parser 210 may be an H.264 compliant AVC Network Abstraction Layer (NAL) header parser or other abstraction-layer header parser with similar functionality as will be further described in connection with Fig. 4. For example, with reference to Fig. 3B, NAL header parser 210 may receive an input from local memory store, for example, an MP-4 file reader 302. An exemplary streaming server embodiment may be a streaming server for providing IP television channel or movie services. In alternative embodiment Fig. 3C, there is shown a de-packetizer 304 for receiving, for example, streaming video from the network 110 and outputting the received packets to NAL header parser 210. An exemplary video application of the streaming server of FIG. 3C may be video telephony where the depicted streaming server is one server in a network path from one video communications terminal to another.

In each of Figures 3A, 3B and 3C, the NAL header parser 210 may provide a packet/frame priority via packetizer 310 to local cache 235. For initial transmission, parser 210 outputs parser data and priority to packetizer 310. Per path 312, a copy is placed in local cache 235 and per path 314, the packetizer sends packet data to depacketizer 320 of streaming receiver. Network monitor 270 provides network transport condition data to retransmission decision maker 275 for selectively deciding on whether or not to retransmit a packet/frame stored in local cache 235 for retransmission over path 316 via network 110 to de-packetizer 320. Path 316 is used for retransmission of selected packets according to transport conditions and parser assigned priority.

Now, with reference to Fig. 4, the functional operation of an abstraction-layer header parser, network monitor and retransmission decision maker according to the present invention will be further described with reference to the depicted flowchart showing both sender or transmitter/server side operation and receiver/client/terminal side operation. At block 400, the server/transmitter of Fig. 3 obtains data, for example, from a local file, per Fig. 3B, file reader 302, or receives data from a network interface, for example, from network 110 and de-packetizer 304 of Fig. 3C. The received data is provided to block 410 which represents the abstraction-layer header parser 210 of Figures 2A and 3.

Referring briefly to Fig. 5, there is shown a typical abstraction-layer header, for example, an SVC NAL extension header, providing fields to be parsed. For example, the abstraction-layer header parser 410 may parse a DID field shown appearing at positions 1-3 of the second byte (BYTE 1) which represents an inter-layer coding dependency of layer representation or level of spatial/resolution scalability. A QID field at, for example, positions 4-7 of the second byte (BYTE 1), may follow and represents a quality level of medium grain scalability (MGS) layer representation. A TID field, for example, at positions 0-2 of the third byte (BYTE 2), represents a temporal level of layer representation. One result of parsing an abstraction-layer header comprising such fields is to identify the layer that the following payload data is associated with. Responsive to the identification of the payload data type, a parser at parser block 410 of Fig. 4 may assign a different priority for each identified layer for following data, for example, a low, medium and high priority. More than three levels of priority may be employed in alternative embodiments. For example, a base layer for a payload data type may receive a high priority for retransmission from buffer or cache memory 235 since base layer is absolutely necessary for a complete decoding at a receiver 201. An enhancement layer that, for example, enhances resolution may be assigned a medium priority since enhancement layer data is necessary for decoding of a higher layer. An SVC-encoded stream of digital data may comprise a base layer and one enhancement layer. On the other hand, a second or more enhancement layers may be provided for even greater picture quality enjoyment but not necessary for viewing, and, so, a higher enhancement layer may be assigned a low priority in cache 235 for associated payload data.

To provide a simplified example, if SVC-encoded video data has a base layer of a resolution of 416 by 240 and a bit rate of 600 kbps and one enhancement layer of a higher resolution of 832 by 480 and a consequent bit rate of 1.2 megabits per second for video streaming, then, the parser 410 can identify the base layer NAL units based on its DID field and assign the base layer a higher priority. On the other hand, the enhancement layer may be assigned a lower priority (to provide the higher resolution). The base layer is assigned the higher priority than the enhancement layer in this example. The output priority level may be indicated in a payload type (PT) field of an RTP header shown in Figure 6 at positions 9-15. Once assigned a priority, (for example, low, medium and high) the priority information may also be represented in a similar field of a real-time protocol (RTP) header, if retransmission is called for at the transport layer, or in a type of service (TOS) field of an IP header. Initially, a copy is buffered at block 420 in local cache/buffer memory at 430 as the packet is transmitted via "send the packet" 450 toward a receiver via network 110. The packet may be lost in the network or received. The packet in local cache 430 awaits a determination as to network conditions and whether the packet is received or not.

If the packet is received and network conditions appear to be good, the packet is received at 460 and the receiver determines at 465 whether an expected packet is lost (Yes) or not (No). If lost (Yes), then at 485, a retransmit request is sent, and a recovery timer of a receiver is set via the control channel 255 of Figure 2B back to the sender/transmitter/server 200. If no, then at 490, the received packet is placed in proper order in a receiving buffer, for example for a display function 206 at the receiver/client 201.

If a retransmit request is sent via 485, a network monitor function 405 is actuated, and the received retransmit request is processed. As will be described further herein, an end-to-end packet loss rate at a given time may be determined at network monitor 271 as a current network 110 condition from the receiver side. The current network condition, for example, an end-to-end packet loss rate, is provided with the retransmit request to network monitor function 405 and to retransmission decision maker function 415.

An exemplary application of a network monitor function 405 may be where the sender/server 200 is on a wired network 110, for example, a set-top box (cable or satellite) or home gateway, and the receiver side, for example, client 201, is a mobile device or personal computer that is associated with a wireless access point (AP). An intermediate node/wireless access point (AP/router) may report the network and wireless channel conditions to the sender. A real-time packet retransmission decision made by a reliable media protocol (RMP) module 230 according to the principles of the present invention may be thus layer-aware when modified to incorporate an abstraction-layer header parser and method according to one embodiment.

Retransmission decision maker 415 questions whether, for example, the current end-to-end transmit packet loss rate is high, meaning whether it is above a threshold level set in memory of the RMP module 230. If the answer is YES, then, at 445, lower priority packets are dropped, and only higher priority packets are recovered from cache/buffer 430 and retransmitted. Other measures of transport conditions besides packet loss rate may be available bandwidth (for example, the lowest available bandwidth in an end-to-end path) and round-trip delay (a longer round-trip delay may require the time-out of a packet held in cache/buffer 235 for retransmission). Each of these, including available bandwidth, may be compared with an associated threshold level set in memory for deciding on packet retransmission. One or more may be employed in making the retransmission decision as well as packet priority set by parsing 410. If the answer is returned NO, at 435, all requested packets are retransmitted from cache/buffer 430 via "send the packet" 450 and network 110.

Upon receipt, the retransmitted packet is received at 460 and recognized as a retransmitted packet at 470. Given a real-time viewing experience, the time of receipt is examined at 475. The question is asked: Retransmit late? If the retransmitted packet is received too late, that is, the program viewing experience has already moved on to a next frame, then, the retransmit packet is discarded at 480. On the other hand, if the retransmit packet is not late, (i.e., the answer is NO), the retransmit packet is placed in order in a receiving buffer for display at 490.

The RMP method of the present invention may be implemented in a flexible software library, hardware, firmware, any computer or processor, an application specific integrated circuit (ASIC), a reduced instruction set computer (RISC), a field programmable gate array (FPGA) or an combination thereof. The RMP method of the present invention uses socket-like user-space APIs and underlying transport means for easy integration with streaming server and player applications. The RMP method of the present invention is transparent to the streaming applications that it supports. The UDP data channel and the TCP control channel are internally maintained. The RMP method of the present invention is extensible to support other error recovery schemes such as FEC and hybrid ARQ.

The network monitor function 405 of the present invention will now be described further with reference to Fig.'s 6, 7 and 8. One possible approach is shown in Figure 6 where the network monitor 271, for example, may detect a sequence gap from a sequence number, positions 6-1 of first line. Another approach is to utilize a continuity counter (CC) field of an MPEG-2 transport stream header of one byte as seen in Fig. 7.

The exemplary format of the message for sending statistics collected by a network monitor 271 of a receiver/client 201 of Figure 2B to server/transmitter 200 of Figure 2A is shown in Figure 8. The message format may be similar to an RTP Control Protocol (RTCP) receiver report (RR) message. In particular, one may provide a "fraction lost" field, for example, at positions 0-7 of line 4. Other relevant data may be provided such as a cumulative number of packets lost which may be compared with a previously received cumulative number of packets lost on the same channel. The difference provides a number of packets lost within an interval defined by the time between successful receipt of successive messages.

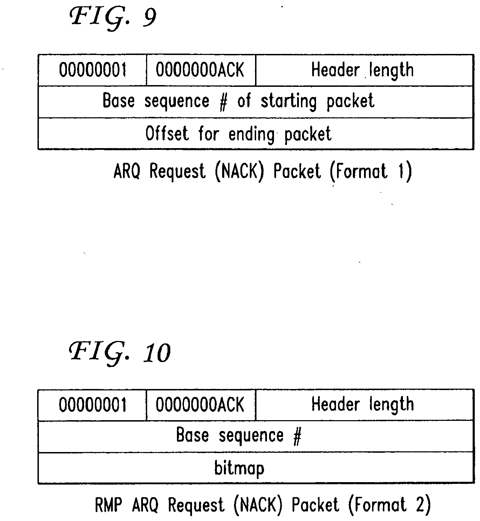

Figure 9 provides a format for a sender/server/transmitter obtaining network packet loss through the retransmission requests received from the receiver/client 201. A network monitor function 405 of Figure 4 calculates a number of lost packets from the fields "Base sequence # of starting packet" and "offset for ending packet." Similarly, the RMP ARQ request (NACK) packet of Figure 10 provides a base sequence number which can be stored and compared with subsequently received base sequence numbers. The depicted base sequence number and the bitmap indicate the sequence of the packets that the receiver requests to be retransmitted. Yet another approach to determining network transport conditions is to monitor the lower layer, for example, network/MAC/PHY level transmission statistics to estimate the channel conditions and available bandwidth.

In the RMP scheme of the present invention described above, no alterations are made to the packets sent on the data channel 255. Thus, backward compatibility is maintained. Also the RMP scheme of the present invention makes efficient use of the bandwidth since only the lost media packets are requested and retransmitted on the control channel with low overhead. The lost packet requests serve as NACKs (Negative Acknowledgements) and also provide feedback to the sender. It can provide high reliability under widely different channel conditions because a lost packet can be retransmitted multiple times within the recovery time window. Also the RMP scheme of the present invention enforces the application's latency constraint by having a maximum wait time (i.e., a recovery window) for retransmissions and thus operates on the best effort delivery model within the given time constraint.

Note that the above embodiment is explained using video transmission. The present invention can also be applied to transmission of audio, for example, telephony, and other real-time multimedia streaming applications.

Though the above scheme of the present invention has been described with respect to wireless networks, the scheme could be used in any kind of network that involves packet losses.

It is to be understood that the present invention may be implemented in various forms of hardware, software, firmware, special purpose processors, or a combination thereof. Preferably, the present invention is implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware -- such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform, such as an additional data storage device and a printing device.

It is to be further understood that, because some of the constituent system components and method steps depicted in the accompanying figures are preferably implemented in software, the actual connections between the system components (or the process steps) may differ depending upon the manner in which the present invention is programmed. Given the teachings herein, one of ordinary skill in the related art will be able to contemplate these and similar implementations or configurations of the present invention.

## Claims

1. A method comprising:
receiving a scalable video encoding, SVC, video data packet (205):
parsing (210; 410) a network abstraction-layer header, NALH, of said video data packet to obtain layer representation data, said layer representation data identifying a layer with which a following payload data is associated;
assigning (410) a priority to said identified layer in response to said layer representation data;
storing (420) a data indicating said assigned priority along with said video packet in a cache memory (235; 430);
transmitting (260; 440) said video data packet via a first protocol (240) to a receiver (201), said first protocol being without a feature of lost packet recovery;
measuring (270; 405) a network condition;
receiving (405) a request via a second protocol from said receiver (201) for a retransmission of said video packet, said second protocol providing end-to-end acknowledgment of data and error recovery;
determining (275; 415) whether to retrieve said video packet from said cache memory (235; 420) for said retransmission based on said network condition and said priority assigned to said video data packet; and
retransmitting (435) said retrieved video data packet via said second protocol (246) to said receiver (201) so long as said video data packet remains available in said cache memory (235; 430).

2. The method of claim 1 wherein:
said first protocol includes the User Datagram Protocol, UDP, transmission protocol.

3. The method of claim 1 wherein:
said second protocol includes the Transmission Control Protocol, TCP, transport protocol.

4. The method of claim 1 wherein:
said layer representation data indicates one of a base layer and enhancement layer.

5. The method of claim 4, wherein:
a first priority for retransmission is assigned to said base layer;
a second priority for retransmission is assigned to said enhancement layer; and
said first priority is higher than said second priority.

6. The method of claim 1, wherein
said network condition is measured by either one of or a combination of an end-to-end packet loss rate, an available bandwidth, and a round-trip delay.

7. The method of claim 1, wherein
said copy of said transmitted video packet remains in said cache memory temporarily during a predetermined time.

8. An apparatus comprising:
means for receiving a scalable video encoding, SVC, video data packet (205):
means (210) for parsing a network abstraction-layer header, NALH, of said video data packet to obtain layer representation data, said layer representation data identifying a layer with which a following payload data is associated;
means for assigning a priority to said identified layer in response to said layer representation data;
means for storing a data indicating said assigned priority along with said video packet in a cache memory (235);
means (260) for transmitting said video data packet via a first protocol (240) to a receiver (201), said first protocol being without a feature of lost packet recovery;
means (270) for measuring a network condition;
means for receiving a request via a second protocol from said receiver (201) for a retransmission of said video packet, said second protocol providing end-to-end acknowledgment of data and error recovery;
means for determining (275) whether to retrieve said video packet from said cache memory (235) for said retransmission based on said network condition and said priority assigned to said video data packet; and
means for retransmitting said retrieved video data packet via said second protocol (246) to said receiver (201) so long as said video data packet remains available in said cache memory (235).

9. The apparatus of claim 8, wherein:
said first protocol includes the User Datagram Protocol, UDP, transmission protocol.

10. The apparatus of claim 8, wherein:
said second protocol includes the Transmission Control Protocol, TCP, transport protocol.

11. The apparatus of claim 8, wherein:
said layer representation data indicates one of a base layer and enhancement layer.

12. The apparatus of claim 11, wherein:
a first priority for retransmission is assigned to said base layer;
a second priority for retransmission is assigned to said enhancement layer; and
said first priority is higher than said second priority.

13. The apparatus of claim 8, wherein
said network condition is measured by either one of or a combination of an end-to-end packet loss rate, an available bandwidth, and a round-trip delay.

14. The apparatus of claim 8, wherein
said copy of said transmitted video packet remains in said cache memory temporarily during a predetermined time.

## Patentansprüche

1. Verfahren, das umfasst:
Empfangen eines Videodatenpakets (205) skalierbarer Videocodierung, SVC-Videodatenpakets;
Parsen (210; 410) eines Netzabstraktionsschicht-Anfangsblocks, NALH, des Videodatenpakets, um Schichtdarstellungsdaten zu erhalten, wobei die Schichtdarstellungsdaten eine Schicht identifizieren, der nachfolgende Nutzdaten zugeordnet sind;
Zuweisen (410) einer Priorität zu der identifizierten Schicht in Ansprechen auf die Schichtdarstellungsdaten;
Speichern (420) von Daten, die die zugewiesene Priorität angeben, zusammen mit dem Videopaket in einem Cache-Speicher (235; 430);
Senden (260; 440) des Videodatenpakets an einen Empfänger (201) über ein erstes Protokoll (240), wobei das erste Protokoll ohne ein Merkmal der Wiederherstellung verlorener Pakete ist;
Messen (270; 405) eines Netzzustands;
über ein zweites Protokoll Empfangen (405) einer Anforderung für eine erneute Übertragung des Videodatenpakets von dem Empfänger (201), wobei das zweite Protokoll eine Ende-Ende-Quittierung von Daten und eine Fehlerkorrektur bereitstellt;
Bestimmen (275; 415), ob das Videodatenpaket für die erneute Übertragung aus dem Cache-Speicher (235; 430) wiederhergestellt werden soll, auf der Grundlage des Netzzustands und der dem Videodatenpaket zugewiesenen Priorität; und
erneutes Senden (435) des wiederhergestellten Videodatenpakets über das zweite Protokoll (246) an den Empfänger (201), solange das Videodatenpaket in dem Cache-Speicher (235; 430) verfügbar bleibt.

2. Verfahren nach Anspruch 1, wobei:
das erste Protokoll das User-Datagram-Protocol-Übertragungsprotokoll, UDP-Übertragungsprotokoll, enthält.

3. Verfahren nach Anspruch 1, wobei:
das zweite Protokoll das Transmission-Control-Protocol-Transportprotokoll, TCP-Transportprotokoll, enthält.

4. Verfahren nach Anspruch 1, wobei:
die Schichtdarstellungsdaten eine Basisschicht oder eine Erweiterungsschicht angeben.

5. Verfahren nach Anspruch 4, wobei:
der Basisschicht eine erste Priorität für die erneute Übertragung zugewiesen wird;
der Erweiterungsschicht eine zweite Priorität für die erneute Übertragung zugewiesen wird; und
die erste Priorität höher als die zweite Priorität ist.

6. Verfahren nach Anspruch 1, wobei
der Netzzustand durch eines oder eine Kombination einer Ende-Ende-Paketverlustrate, einer verfügbaren Bandbreite und einer Umlaufverzögerung gemessen wird.

7. Verfahren nach Anspruch 1, wobei:
die Kopie des gesendeten Videopakets während einer vorgegebenen Zeitdauer vorübergehend in dem Cache-Speicher bleibt.

8. Vorrichtung, die umfasst:
Mittel zum Empfangen eines Videodatenpakets (205) skalierbarer Videocodierung, SVC-Videodatenpakets;
Mittel (210) zum Parsen eines Netzabstraktionsschicht-Anfangsblocks, NALH, des Videodatenpakets, um Schichtdarstellungsdaten zu erhalten, wobei die Schichtdarstellungsdaten eine Schicht identifizieren, der folgende Nutzdaten zugeordnet sind;
Mittel zum Zuweisen einer Priorität zu der identifizierten Schicht in Ansprechen auf die Schichtdarstellungsdaten;
Mittel zum Speichern von Daten, die die zugewiesene Priorität angeben, zusammen mit dem Videopaket in einem Cache-Speicher (235);
Mittel (260) zum Senden des Videodatenpakets an einen Empfänger (201) über ein erstes Protokoll (240), wobei das erste Protokoll ohne ein Merkmal der Wiederherstellung verlorener Pakete ist;
Mittel (270) zum Messen eines Netzzustands;
Mittel, um über ein zweites Protokoll eine Anforderung für eine erneute Übertragung des Videodatenpakets von dem Empfänger (201) zu empfangen, wobei das zweite Protokoll eine Ende-Ende-Quittierung von Daten und eine Fehlerkorrektur bereitstellt;
Mittel zum Bestimmen (275), ob das Videodatenpaket für die erneute Übertragung aus dem Cache-Speicher (235) wiederhergestellt werden soll, auf der Grundlage des Netzzustands und der dem Videodatenpaket zugewiesenen Priorität; und
Mittel zum erneuten Senden des wiederhergestellten Videodatenpakets über das zweite Protokoll (246) an den Empfänger (201), solange das Videodatenpaket in dem Cache-Speicher (235) verfügbar bleibt.

9. Vorrichtung nach Anspruch 8, wobei:
das erste Protokoll das User-Datagram-Protocol-Übertragungsprotokoll, UDP-Übertragungsprotokoll, enthält.

10. Vorrichtung nach Anspruch 8, wobei:
das zweite Protokoll das Transmission-Control-Protocol-Transportprotokoll, TCP-Transportprotokoll, enthält.

11. Vorrichtung nach Anspruch 8, wobei:
die Schichtdarstellungsdaten eine Basisschicht oder eine Erweiterungsschicht angeben.

12. Vorrichtung nach Anspruch 11, wobei:
der Basisschicht eine erste Priorität für die erneute Übertragung zugewiesen wird;
der Erweiterungsschicht eine zweite Priorität für die erneute Übertragung zugewiesen wird; und
die erste Priorität höher als die zweite Priorität ist.

13. Vorrichtung nach Anspruch 8, wobei
der Netzzustand durch eines oder eine Kombination einer Ende-Ende-Paketverlustrate, einer verfügbaren Bandbreite und einer Umlaufverzögerung gemessen wird.

14. Vorrichtung nach Anspruch 8, wobei:
die Kopie des gesendeten Videopakets während einer vorgegebenen Zeitdauer vorübergehend in dem Cache-Speicher bleibt.

## Revendications

1. Procédé comprenant des étapes consistant à :
recevoir un paquet de données vidéo à codage vidéo évolutif, SVC, (205) ;
analyser (210 ; 410) un en-tête de couche d'abstraction de réseau, NALH, dudit paquet de données vidéo pour obtenir des données de représentation de couche, lesdites données de représentation de couche identifiant une couche à laquelle sont associées des données utiles suivantes ;
attribuer (410) une priorité à ladite couche identifiée en réponse auxdites données de représentation de couche ;
stocker (420) des données indiquant ladite priorité attribuée avec ledit paquet vidéo dans une mémoire cache (235 ; 430) ;
transmettre (260 ; 440) ledit paquet de données vidéo via un premier protocole (240) à un récepteur (201), ledit premier protocole n'ayant pas de fonctionnalité de récupération des paquets perdus ;
mesurer (270 ; 405) une condition réseau ;
recevoir (405) une demande via un deuxième protocole dudit récepteur (201) pour une retransmission dudit paquet vidéo, ledit deuxième protocole fournissant un accusé de réception de données de bout en bout et une reprise sur erreur ;
déterminer (275 ; 415) si ledit paquet vidéo doit être extrait de ladite mémoire cache (235 ; 430) pour ladite retransmission d'après ladite condition réseau et ladite priorité attribuée audit paquet de données vidéo ; et
retransmettre (435) ledit paquet de données vidéo extrait via ledit deuxième protocole (246) audit récepteur (201) tant que ledit paquet de données vidéo reste disponible dans ladite mémoire cache (235 ; 430).

2. Procédé selon la revendication 1, dans lequel :
ledit premier protocole inclut le protocole de transmission UDP (User Datagram Protocol).

3. Procédé selon la revendication 1, dans lequel :
ledit deuxième protocole inclut le protocole de transport TCP (Transmission Control Protocol).

4. Procédé selon la revendication 1, dans lequel :
lesdites données de représentation de couche indiquent une couche de base ou une couche d'amélioration.

5. Procédé selon la revendication 4, dans lequel :
une première priorité de retransmission est attribuée à ladite couche de base ;
une deuxième priorité de retransmission est attribuée à ladite couche d'amélioration ; et
ladite première priorité est supérieure à ladite deuxième priorité.

6. Procédé selon la revendication 1, dans lequel
ladite condition réseau est mesurée par l'un ou une combinaison d'un taux de perte de paquets de bout en bout, d'une bande passante disponible et d'un délai aller-retour.

7. Procédé selon la revendication 1, dans lequel
ladite copie dudit paquet vidéo transmis reste temporairement dans ladite mémoire cache pendant une durée prédéterminée.

8. Appareil comprenant :
un moyen pour recevoir un paquet de données vidéo à codage vidéo évolutif, SVC, (205) ;
un moyen (210) pour analyser un en-tête de couche d'abstraction de réseau, NALH, dudit paquet de données vidéo pour obtenir des données de représentation de couche, lesdites données de représentation de couche identifiant une couche à laquelle sont associées des données utiles suivantes ;
un moyen pour attribuer une priorité à ladite couche identifiée en réponse auxdites données de représentation de couche ;
un moyen pour stocker des données indiquant ladite priorité attribuée avec ledit paquet vidéo dans une mémoire cache (235) ;
un moyen (260) pour transmettre ledit paquet de données vidéo via un premier protocole (240) à un récepteur (201), ledit premier protocole n'ayant pas de fonctionnalité de récupération des paquets perdus ;
un moyen (270) pour mesurer une condition réseau ;
un moyen pour recevoir une demande via un deuxième protocole dudit récepteur (201) pour une retransmission dudit paquet vidéo, ledit deuxième protocole fournissant un accusé de réception de données de bout en bout et une reprise sur erreur ;
un moyen pour déterminer (275) si ledit paquet vidéo doit être extrait de ladite mémoire cache (235) pour ladite retransmission d'après ladite condition réseau et ladite priorité attribuée audit paquet de données vidéo ; et
un moyen pour retransmettre ledit paquet de données vidéo extrait via ledit deuxième protocole (246) audit récepteur (201) tant que ledit paquet de données vidéo reste disponible dans ladite mémoire cache (235).

9. Appareil selon la revendication 8, dans lequel :
ledit premier protocole inclut le protocole de transmission UDP (User Datagram Protocol).

10. Appareil selon la revendication 8, dans lequel :
ledit deuxième protocole inclut le protocole de transport TCP (Transmission Control Protocol).

11. Appareil selon la revendication 8, dans lequel :
lesdites données de représentation de couche indiquent une couche de base ou une couche d'amélioration.

12. Appareil selon la revendication 11, dans lequel :
une première priorité de retransmission est attribuée à ladite couche de base ; une deuxième priorité de retransmission est attribuée à ladite couche d'amélioration ; et ladite première priorité est supérieure à ladite deuxième priorité.

13. Appareil selon la revendication 8, dans lequel
ladite condition réseau est mesurée par l'un ou une combinaison d'un taux de perte de paquets de bout en bout, d'une bande passante disponible et d'un délai aller-retour.

14. Appareil selon la revendication 8, dans lequel
ladite copie dudit paquet vidéo transmis reste temporairement dans ladite mémoire cache pendant une durée prédéterminée.
